Europäisches Patentamt

European Patent Office

Office européen des brevets

(19)

(11) Numéro de publication : **0 162 753**
**B1**

(12) **FASCICULE DE BREVET EUROPÉEN**

(45) Date de publication du fascicule du brevet :
05.04.89

(51) Int. Cl.⁴ : $G\ 21\ F\ 5/00$, $B\ 21\ C\ 37/15$

(21) Numéro de dépôt : 85400795.2

(22) Date de dépôt : 23.04.85

(54) **Procédé de fabrication d'une enveloppe à double paroi contenant un ecran absorbeur de neutrons pour le transport et le stockage d'une matière radioactive.**

(30) Priorité : 25.04.84 FR 8406498

(43) Date de publication de la demande :
27.11.85 Bulletin 85/48

(45) Mention de la délivrance du brevet :
05.04.89 Bulletin 89/14

(84) Etats contractants désignés :
BE CH DE GB IT LI SE

(56) Documents cités :
FR--A-- 2 212 820
GB--A-- 820 883
GB--A-- 1 233 574
US--A-- 4 031 921
US--A-- 4 399 366

(73) Titulaire : **B.S.L. (BIGNIER SCHMID-LAURENT)**
**25, Quai Marcel-Boyer**
**F-94203 Ivry-sur-Seine (FR)**

**SOCIETE ANONYME DES ETABLISSEMENTS LEMER & CIE**
**Rue de la Fonderie Z.I.**
**F-44470 Nantes carquefou (FR)**

(72) Inventeur : **Madiot, André**
**13, rue de l'Urmois Pasly**
**F-02200 Soissons (FR)**
Inventeur : **Kerjean, Joel**
**13, Avenue du Golf**
**F-44800 Saint Herblain (FR)**

(74) Mandataire : **Schrimpf, Robert et al**
**Cabinet Regimbeau 26, Avenue Kléber**
**F-75116 Paris (FR)**

Jouve, 18, rue St-Denis, 75001 Paris, France

## Description

L'invention concerne un procédé de fabrication d'une enveloppe à double paroi contenant un écran absorbeur de neutrons pour l'emballage d'un combustible nucléaire.

On connaît, par exemple, par le brevet américain 3 119 933 un récipient de transport pour matière radio-active comprenant une double paroi contenant une matière écran telle que des blocs de plomb.

La fabrication d'un tel récipient pose le problème de l'insertion de la matière écran entre les deux autres parois. Cette insertion présente une difficulté accrue lorsque la matière écran n'est pas sous forme de blocs relativement épais et relativement rigides mais se trouve sous forme d'une feuille mince qui présente des caractéristiques mécaniques faibles, comme c'est le cas notamment des tôles d'acier au bore et des feuilles de cadmium éventuellement allié.

On connaît d'autre part (brevet US-A-4031921) un procédé dans lequel on assemble de façon intime un tube extérieur et un écran intérieur par passage sur un ou plusieurs mandrins successivement puis on passe à nouveau cet assemblage sur un ou plusieurs mandrins, après avoir enfilé un tube intérieur, pour obtenir un ensemble composite, mais il n'est pas possible d'utiliser un tel procédé lorsque l'écran est une feuille mince ayant une épaisseur de l'ordre de 0,10 à 1 mm qui présente des caractéristiques mécaniques faibles.

La présente invention vise à résoudre ce problème. et à permettre l'utilisation d'un écran absorbeur de neutrons ayant une épaisseur de l'ordre de 0,10 à 1 mm. L'invention n'est pas limitée à une composition particulière de matériau écran et ne porte pas sur cette composition. Pour information, des matériaux écran que l'on peut utiliser sont par exemple les matériaux absorbeurs de neutrons décrits dans le brevet suisse 364 565 et dans le brevet GB 958 267, étant entendu que ces exemples ne sont pas limitatifs de la portée de l'invention.

Selon l'invention, pour fabriquer une enveloppe comprenant un écran absorbeur de neutrons ayant une épaisseur de 0,10 à 1 mm entre les faces en regard de deux tubes d'acier formant une double paroi, on met en œuvre un procédé dans lequel de façon en soi connue on utilise deux tubes susceptibles d'être enfilés l'un dans l'autre, on fixe ledit écran à l'une desdites faces avant l'enfilage, on réalise l'enfilage et on expanse radialement le tube interne dans le tube externe, ce procédé étant caractérisé en ce qu'on fixe l'écran à l'un desdits tubes par soudage local pour assurer sa tenue provisoire pour l'enfilage et on réalise ladite expansion, en laissant le tube externe libre extérieurement jusqu'à obtenir, par déformation plastique, un ensemble tubulaire ayant la forme et les dimensions souhaitées et rendu monobloc par l'expansion.

De préférence, on fixe l'écran sur le tube interne, c'est-à-dire sur la face externe du tube interne, pour assurer la tenue provisoire de cet écran pour l'enfilage.

Dans une autre réalisation, on fixe l'écran sur la face interne du tube externe, avec ou sans mise en forme préalable avant l'enfilage.

Pour fixer l'écran absorbeur sur le tube interne, on utilise de préférence soit une technique de soudage local direct de l'écran, soit une technique consistant à entourer l'écran par une bande en feuillard dont on soude les extrémités au tube.

L'écran absorbeur est choisi dans la gamme des nappes ayant de 0,10 à 1 mm d'épaisseur, de préférence 0,4 à 0,9 mm et encore mieux 0,5 à 0,8 mm.

Il est à noter que cet écran peut être placé autour du tube interne quel que soit le profil de ce tube de même que la bande utilisée pour maintenir l'écran sur le tube interne peut être utilisée quel que soit le profil du tube interne.

Dans une réalisation préférée, on fait subir à l'assemblage du tube interne et de l'écran une première mise en forme de la section droite de cet assemblage avant de l'enfiler dans le tube externe, pour pouvoir utiliser un tube externe de section droite aussi voisine que possible de celle du tube interne, afin d'éviter à la mise en forme finale interne des déformations trop importantes, génératrices de contraintes résiduelles dangereuses pour la tenue de l'emballage dans le temps.

Le tube interne peut avoir n'importe quelle section désirée mais on donne la préférence à la section circulaire et à la section carrée.

Il est à noter que même dans le cas où l'on désire un emballage de section carrée, il est possible de partir d'un tube interne de section circulaire et de le mettre approximativement au carré avant son enfilage dans le tube externe, éventuellement avant de l'entourer avec l'écran.

De même, dans le cas où le tube externe doit avoir une section carrée, il est préconisé de fabriquer d'abord un tube externe de section circulaire et de le mettre approximativement au carré avant l'enfilage de l'assemblage du tube interne et de l'écran dans le tube externe.

Pour mettre au carré, soit approximativement, soit de manière précise le tube interne ou le tube externe, il est préconisé d'utiliser de préférence le procédé décrit dans le brevet français 79 08760 de la Demanderesse. Ce procédé utilise une expansion radiale pour mettre en forme la section droite du tube par déformation plastique, le tube restant libre extérieurement.

Les tubes interne et externe sont de préférence des tubes en acier ayant toute composition et toute dimension choisies. On utilise par exemple des tôles en acier inoxydable ayant une épaisseur de 1,5 à 4 mm.

Un emballage réalisé conformément à l'invention est utilisable comme emballage de transport et surtout comme emballage de stockage car il peut être disposé à proximité immédiate d'un autre emballage identique, ce qui assure une densité de stockage maximale dans un volume donné.

La figure 1 du dessin joint est une coupe longitudinale, avec arrachements, qui montre un emballage réalisé suivant un procédé conforme à l'invention.

La figure 2 est un ensemble de coupes transversales de l'emballage montrant différentes étapes du procédé de fabrication.

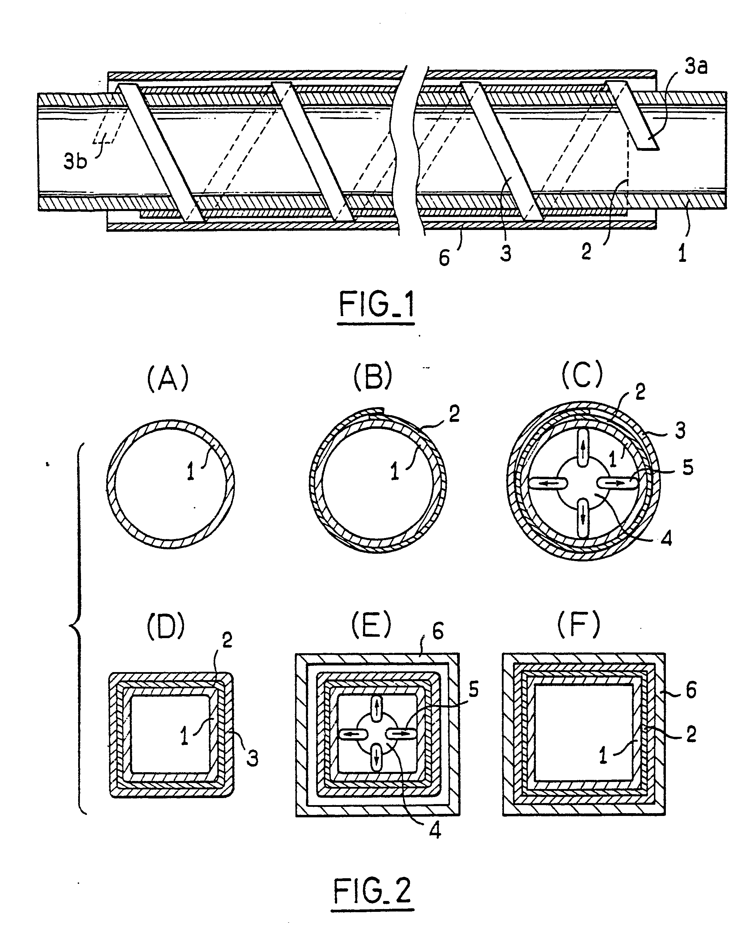

La figure 1 montre schématiquement le tube interne 1 sur lequel est enroulée une feuille de matériau absorbeur de neutrons 2 maintenue en place par une bandelette 3 dont les extrémités 3a et 3b sont fixées, par exemple soudées, au tube 1. L'assemblage ainsi obtenu est enfilé dans un tube 6. La figure 2 illustre l'ensemble du procédé de fabrication dans lequel on part d'un tube rond 1 (figure 2), on enroule sur ce tube la feuille 2 avec recouvrement des extrémités de la feuille (figure 2), on entoure la feuille 2 avec la bandelette 3 dont on soude les extrémités au tube et on enfile à l'intérieur du tube 1 un dispositif d'expansion comprenant un noyau support 4 et des poussoirs 5 (figure 2) pour expanser le tube 1 radialement jusqu'à lui conférer une forme approximativement carrée (figure 2), on place alors l'assemblage dans le tube externe 6 qui a été lui-même amené à la forme approximativement carrée et on expanse à nouveau (figure 2) l'ensemble jusqu'à obtenir l'assemblage définitif (figure 2).

Le dispositif à poussoirs est par exemple du type décrit dans les brevets français FR-A-2452 982 et FR-A-2487 229.

L'invention s'applique notamment à l'emballage des combustibles nucléaires pour le stockage de ces combustibles dans des cellules ou piscines où les emballages sont disposés côte à côte avec un espace aussi réduit que possible entre les emballages.

Si la nature du fluide en contact avec l'écran est susceptible d'altérer ce dernier, on préconise de solidariser, par exemple par soudage, les extrémités du tube interne et du tube externe de façon à rendre étanche l'espace intercalaire où se trouve l'écran absorbeur.

**Revendications**

1. Procédé pour fabriquer une enveloppe à double paroi contenant un écran pour l'emballage d'un combustible nucléaire, dans lequel, de façon en soi connue, on utilise deux tubes (1, 6) susceptibles d'être enfilés l'un dans l'autre de façon à présenter deux faces en regard, on fixe ledit écran (2) à l'une desdites faces, on enfile les deux tubes l'un dans l'autre et on expanse radialement le tube interne (1) dans le tube externe (6), caractérisé en ce que, pour pouvoir utiliser un écran constitué d'une feuille en un matériau absorbeur de neutrons d'une épaisseur comprise entre 0,1 mm et 1 mm, on fixe l'écran à l'un desdits tubes par soudage local pour assurer sa tenue provisoire pour l'enfilage et on réalise ladite expansion, en laissant le tube externe libre extérieurement, jusqu'à obtenir, par déformation plastique, un ensemble monobloc ayant la forme et les dimensions souhaitées pour l'emballage.

2. Procédé selon la revendication 1, caractérisé en ce qu'on fixe l'écran (2) par soudage local de l'écran au tube.

3. Procédé selon la revendication 1, caractérisé en ce qu'on fixe l'écran (2) sur le tube interne (1) en entourant l'écran par une bande (3) dont on soude les extrémités (3a, 3b) au tube interne.

4. Procédé selon l'une des revendications 1 à 3, caractérisé en ce qu'on fait subir au tube qui porte l'écran (2) une première mise en forme en section droite avant ledit enfilage.

5. Procédé selon la revendication 4, caractérisé en ce qu'on utilise un tube interne (1) de section circulaire que l'on met approximativement au carré par expansion radiale avant l'enfilage.

6. Procédé selon la revendication 4, caractérisé en ce qu'on utilise un tube externe (6) de section circulaire que l'on met approximativement au carré, par expansion radiale, avant l'enfilage.

7. Procédé selon l'une des revendications précédentes caractérisé en ce qu'il comporte de plus la solidarisation des extrémités des tubes (1, 6) pour rendre étanche l'espace intercalaire où se trouve ledit écran (2).

8. Enveloppe à double paroi contenant un écran absorbeur de neutrons (2) entre deux tubes en acier (1, 6) caractérisée en ce que l'écran absorbeur de neutrons est une nappe d'épaisseur de la gamme 0,10-1 mm, de préférence 0,4-0,9 mm et encore mieux 0,5-0,8 mm.

9. Enveloppe selon la revendication 8, caractérisée, en ce que ledit écran (2) est soudé localement au tube interne (1).

10. Enveloppe selon la revendication 8, caractérisée en ce que ledit écran absorbeur de neutrons (2) est maintenu sur le tube interne (1) par une bandelette (3) dont les extrémités sont soudées au tube interne.

11. Enveloppe selon l'une des revendications 8 à 10, caractérisée en ce que les extrémités des deux tubes (1, 6) sont solidarisées de façon à rendre étanche l'espace intercalaire contenant ledit écran (2).

12. Application d'une enveloppe selon l'une des revendications 8 à 11 ou obtenue par un procédé selon l'une des revendications 1 à 7 au stockage d'un combustible nucléaire.

**Claims**

1. Process for manufacturing a double-walled envelope containing a shield for packing a nuclear fuel, in which, in manner known per se, one uses two tubes (1, 6) able to be inserted one in the other in order to comprise two opposing faces, the said shield (2) is fixed to one of said faces, the two tubes are inserted one in the other and the inner tube (1) is expanded radially in the outer tube (6), characterised in that, in order to be able to use a shield constituted by a sheet of neutron-absorbing material having a thickness of between 0.1 mm and 1 mm, the shield is fixed to one of the said tubes by local welding in order to ensure its temporary position for the insertion and the said expansion is carried out leaving the outer tube free externally, until, by plastic deformation, one obtains a one-piece assembly having the desired shape and dimensions for the packing.

2. Process according to Claim 1, characterised in that the shield (2) is fixed by local welding of the shield to the tube.

3. Process according to Claim 1, characterised in that the shield (2) is fixed to the inner tube (1) by surrounding the shield with a strip (3) whereof the ends (3a, 3b) are welded to the inner tube.

4. Process according to one of Claims 1 to 3, characterised in that the tube which supports the shield (2) is subjected to a first shaping operation to produce a straight section, before said insertion.

5. Process according to Claim 4, characterised in that one uses an inner tube (1) of circular section which is made approximately square by radial expansion before the insertion.

6. Process according to Claim 4, characterised in that one uses an outer tube (6) of circular section which is made approximately square, by radial expansion, before the insertion.

7. Process according to one of the preceding Claims, characterised in that it also comprises the connection of the ends of the tubes (1, 6) in order to seal the intermediate space where the said shield (2) is located.

8. Double-walled envelope containing a neutron-absorbing shield (2) between two steel tubes (1, 6), characterised in that the neutron-absorbing shield is a sheet having a thickness of the order of 0.10-1 mm, preferably 0.4-0.9 mm and even better 0.5-0.8 mm.

9. Envelope according to Claim 8, characterised in that the said shield (2) is welded locally to the inner tube (1).

10. Envelope according to Claim 8, characterised in that the said neutron-absorbing shield (2) is held on the inner tube (1) by a small strip (3) whereof the ends are welded to the inner tube.

11. Envelope according to one of Claims 8 to 10, characterised in that the ends of the two tubes (1, 6) are connected in order to seal the intermediate space containing the said shield (2).

12. Application of an envelope according to one of Claims 8 to 11 where obtained by a process according to one of Claims 1 to 7 for the storage of a nuclear fuel.

## Patentansprüche

1. Verfahren zum Herstellen einer Doppelwandhülle mit einem Schirm zum Verpacken von Nuklearbrennstoff, bei dem in an sich bekannter Weise zwei Rohre (1, 6) verwendet werden, die so ineinanderschiebbar sind, daß sich zwei Flächen gegenüberliegen, der genannte Schirm (2) an einer der genannten Flächen befestigt wird, die beiden Rohre ineinandergeschoben werden, und das innere Rohr (1) im äußeren Rohr (6) radial vergrößert wird, dadurch gekennzeichnet, daß, um einen Schirm verwenden zu können, der von einer Folie aus einem Neutronen absorierenden Material von einer Dicke zwischen 0,1 mm und 1 mm gebildet ist, der Schirm zur provisorischen Befestigung für das Ineinanderschieben an einem der genannten Rohre durch örtlich begrenztes Schweißen befestigt wird, und daß bei an der Außenseite freigehaltenem äußerem Rohr die genannte Vergrößerung ausgeführt wird, bis durch plastische Verformung ein verblocktes Ganzes von für die Verpackung gewünschter Form und Abmessungen entsteht.

2. Verfahren nach Anspruch 1, dadurch gekennzeichnet, daß der Schirm (2) durch örtlich begrenztes Anschweißen des Schirms an das Rohr befestigt wird.

3. Verfahren nach Anspruch 1, dadurch gekennzeichnet, daß der Schirm (2) auf dem inneren Rohr (1) durch Umwickeln des Schirms mit einem Band (3), dessen Enden (3a, 3b) an das innere Rohr angeschweißt werden, befestigt wird.

4. Verfahren nach einem der Ansprüche 1 bis 3, dadurch gekennzeichnet, daß das den Schirm (2) tragende Rohr einer ersten Formgebung im Querschnitt vor dem Ineinanderschieben unterworfen wird.

5. Verfahren nach Anspruch 4, dadurch gekennzeichnet, daß ein inneres Rohr (1) von kreisrundem Querschnitt verwendet wird, das durch radiales Vergrößern vor dem Ineinanderschieben ungefähr quadratisch gemacht wird.

6. Verfahren nach Anspruch 4, dadurch gekennzeichnet, daß ein äußeres Rohr (6) von kreisrundem Querschnitt verwendet wird, das durch radiales Vergrößern vor dem Ineinanderschieben ungefähr quadratisch gemacht wird.

7. Verfahren nach einem der vorhergehenden Ansprüche, dadurch gekennzeichnet, daß es ferner das feste Verbinden der Endstücke der Rohre (1, 6) miteinander enthält, um den Zwischenraum, in dem sich der genannte Schirm (2) befindet, abzudichten.

8. Doppelwandhülle mit einem Neutronen absorbierenden Schirm (2) zwischen zwei Rohren (1, 6) aus Stahl, dadurch gekennzeichnet, daß der Neutronen absorbierende Schirm ein Flächengebilde von einer Dicke im Bereich 0,10-1 mm, vorzugsweise 0,4-0,9 mm, ganz bevorzugt 0,5-0,8 mm ist.

9. Hülle nach Anspruch 8, dadurch gekennzeichnet, der genannte Schirm (2) in örtlich begrenztem Bereich an das innere Rohr (1) angeschweißt ist.

10. Hülle nach Anspruch 8, dadurch gekennzeichnet, daß der genannte Neutronen absorbierende Schirm (2) auf dem inneren Rohr (1) durch ein Bändchen (3) gehalten ist, dessen Enden an das innere Rohr angeschweißt sind.

11. Hülle nach einem der Ansprüche 8 bis 10, dadurch gekennzeichnet, daß die Endstücke der beiden Rohre (1, 6) fest miteinander verbunden sind, derart daß der den Schirm (2) enthaltende Zwischenraum abgedichtet ist.

12. Anwendung einer Hülle nach einem der Ansprüche 8 bis 11 oder einer nach einem Verfahren gemäß einem der Ansprüche 1 bis 7 hergestellten Hülle bei der Lagerung eines Nuklearbrennstoffs.

FIG_1

FIG_2

1